# EUROPEAN PATENT APPLICATION

(11) **EP 3 095 596 A1**
(43) Date of publication of application: **23.11.2016**
(21) Application number: 15168748.0
(22) Date of filing: 21.05.2015
(51) Int. Cl.: B29D 30/72, B60C 13/00, B23K 26/00, B23K 26/36, B29C 59/16

(54) **RECESS PATTERN IN A RUBBER ARTICLE**

(71) Applicant: 4JET Technologies GmbH, 52477 Alsdorf (DE)
(72) Inventor: KRAUS, Armin, Dr., 52134 Herzogenrath (DE); REISS, Armin, 52072 Aachen (DE); KEULERS, Patrick, 52066 Aachen (DE)
(74) Representative: Dilg, Haeusler, Schindelmann Patentanwaltsgesellschaft mbH

(57) **Abstract**

Provided is a method and a device of marking a rubber article (102) , the method comprising: generating a recess pattern in the rubber article by removal of rubber material, the recess pattern defining a digital code pattern comprising a plurality of code modules; the recess pattern comprising a first recess portion (124) and a second recess portion (126), the first and second recess portions being recessed with respect to an unaltered surface of the rubber article; the first recess portion (124) and the second recess portion (126) defining therebetween a protrusion protruding over a bottom of each recess portion; wherein a pitch(136) between the first recess portion and the second recess portion is larger than 0.5 mm or wherein the first recess portion and the second recess portion are part of a recess surrounding the protrusion and the protrusion has a base area of more than 0.2 square millimeters.

## Description

### FIELD OF INVENTION

The present invention relates to the field of providing rubber articles with a digital code pattern.

### BACKGROUND

EP 1 063 071 A2 discloses a polymer article in particular a tire with a visible surface wherein either a part of the surface is corrugated in such a way that the distance from corrugation ridge to corrugation ridge is between 4 µm and 40 µm or at least a part of the surface is nubbed in such a way that the distance from nub tip to nub tip is between 5 µm and 60 µm.

US 2009/0218019 A1 discloses an article having at least one visible surface, this surface comprising on at least part of it a pattern contrasting with the surface of the article, this pattern comprising a plurality of tuft distributed over the entire said pattern, each tuft having an average cross section between 0.003 and 0.06 mm². Also disclosed is a moulding process for forming a high-contrast pattern on a surface of an article that can be moulded in a mould, this process consisting in producing, at the position of the pattern on the surface of the mould, a plurality of cavities of average cross section between 0.003 and 0.06 mm². The pattern gives the article on which it is produced a velvet feel.

From the web site "http://qr.biz/articles/the michelin concept qr code tire meets the interest s of farmers/" it is known to provide a tire with a QR code by means of velvet technology.

US 2012/0227879 A1 discloses a tire having a visible surface comprising patterns contrasting with said surface, said pattern comprising, over the entire surface thereof, a plurality of tufts distributed with a density of at least five tufts per mm² or a plurality of blades which are substantially parallel to one another and arranged with a pitch of less than 0.5 mm, each tuft having a mean cross section having a diameter of between 0.03 mm and 0.5 mm or each blade having a mean width of between 0.03 mm and 0.5 mm, characterized in that the walls of the tufts or of the blades have, over at least one quarter of the area thereof, a mean roughness Rz of between 5 µm and 30 µm. The effect of these tufts or blades is to trap the incident light on the surface of the pattern and, by light absorption, to give a black matt appearance to the pattern intended to be produced. Further disclosed is a method of producing molds intended to form the visible imprint of the tires comprising such patterns during vulcanisation.

### SUMMARY

Conventional techniques for surface manipulation of a rubber article (e.g. a tire) are suitable for generating large surface areas of manipulated surface but are not specifically adapted and optimized for providing the rubber article with a the digital code pattern.

In view of the above-described situation, there exists a need for an improved technique that enables to provide a digital code pattern to a rubber article, while substantially avoiding or at least reducing one or more of the above-identified problems.

This need may be met by the subject matter according to the independent claims. Advantageous embodiments of the herein disclosed subject matter are described by the dependent claims.

According to an embodiment of a first aspect of the herein disclosed subject matter there is provided a method of marking a rubber article, the method comprising: generating a recess pattern in the rubber article by removal of rubber material, the recess pattern defining a digital code pattern; the recess pattern comprising a first recess portion and a second recess portion, the first and second recess portions being recessed with respect to an unaltered surface of the rubber article; the first recess portion and the second recess portion defining therebetween a protrusion protruding over a bottom of each recess portion; wherein a pitch between the first recess portion and the second recess portion is larger than 0.5 mm or wherein the first recess portion and the second recess portion are part of a recess surrounding the protrusion and the protrusion has a base area of more than 0.2 square millimeters.

According to embodiments of the first aspect, the method is adapted for providing the functionality of one or more of the herein disclosed embodiments and/or for providing the functionality as required by one or more of the herein disclosed embodiments, in particular of the embodiments of the second, third and fourth aspect disclosed herein.

According to an embodiment of a second aspect of the herein disclosed subject matter there is provided a marking device for marking a rubber article, in particular a tire, the marking device comprising: a tool, in particular a laser, for removing rubber material of the rubber article; a control device for controlling the tool to thereby perform the method according to the first aspect or an embodiment thereof. Other tools (e.g. mechanical tools) are also contemplated.

According to embodiments of the second aspect, the marking device is adapted for providing the functionality of one or more of the herein disclosed embodiments and/or for providing the functionality as required by one or more of the herein disclosed embodiments, in particular of the embodiments of the first, third and fourth aspect disclosed herein.

According to an embodiment of a third aspect of the herein disclosed subject matter there is provided a rubber article, the rubber article comprising: a recess pattern in the rubber article, the recess pattern defining a digital code pattern; the recess pattern comprising a first recess portion and a second recess portion, the first and second recess portions being recessed with respect to an unaltered surface of the rubber article; the first recess portion and the second recess portion defining therebetween a protrusion protruding over a bottom of each recess portion; wherein a pitch between the first recess portion and the second recess portion is larger than 0.5 mm or if the protrusion is surrounded by connected recess portions the protrusion having an area of more than 0.2 square millimeters.

According to embodiments of the third aspect, the rubber article is adapted for providing the features resulting from by one or more of the herein disclosed embodiments, in particular of the embodiments of the first, second and fourth aspect.

According to an embodiment of a fourth aspect of the herein disclosed subject matter there is provided a computer program product configured for controlling a marking device, the computer program product being configured for, when executed on a data processor device, controlling the method according to the first aspect or an embodiment thereof.

According to embodiments of the fourth aspect, the computer program product is adapted for providing the functionality of one or more of the herein disclosed embodiments and/or for providing the functionality as required by one or more of the herein disclosed embodiments, in particular of the embodiments of the first, second and third aspect.

These aspects of the herein disclosed subject matter are based on the idea that the characteristics of a method or a marking device for providing a rubber article with a digital code pattern can be improved by a suitable dimensions of the involved structure elements, in particular the recess portions and protrusions defining the digital code pattern. It has been found that in accordance with embodiments of the herein disclosed subject matter even large structure elements are suitable for defining relatively small code modules of the digital code pattern.

It should be understood that, since aspects of the herein disclosed subject matter relate to a removal of rubber material in order to generate the recess pattern, the aspects and embodiments of the herein disclosed subject matter are well distinguished from methods which generate recesses or protrusions in the rubber article during molding of the rubber article. In contrast, aspects and embodiments of the herein disclosed subject matter allow the rubber article to be provided with a recess pattern (and hence with a digital code pattern) at any time after manufacture of the rubber article (in particular after molding and curing of the rubber article).

In the following, exemplary embodiments of the herein disclosed subject matter are described, any number and any combination of which may be realized in an implementation of aspects of the herein disclosed subject matter.

According to an embodiment, the digital code pattern comprises an array of code modules, e.g. a rectangular array of code modules. However, other array types are also contemplated. According to an embodiment, a code module is the lowest level information element of the digital code pattern. Further, according to an embodiment, the digital code pattern is a binary code pattern of which the code modules represent either a digital "0" or a digital "1". For example, according to an embodiment, the digital code pattern is a so-called QR code, in particular a version 3 QR code comprising 29 x 29 individual code modules. It is noted, that according to an embodiment in a binary digital code pattern a code module comprising a recess portion represents a "black" code module compared to a "white" code module having no recess portion.

It should be understood that within the scope of this application the term "black" represents a code module with a relatively low optical reflectivity and accordingly the term "white" represents a code module with a relatively high optical reflectivity which is higher than the optical reflectivity of the black module. In particular, embodiments of the herein disclosed subject matter are suitable for producing a digital code pattern on a black to black contrast, i.e. by reducing the optical reflectivity of the rubber article at a position corresponding to a black code module. According to an embodiment, a white code module is provided by the unaltered surface of the rubber article. However, a white code module can also be obtained by increasing the optical reflectivity of the surface of the rubber article, e.g. by polishing.

According to an embodiment, the removal of rubber material is performed with an electromagnetic radiation beam, in particular with a laser beam. Electromagnetic radiation provides an accurate and powerful means for manipulating the surface of a rubber article. In particular a laser beam can be provided with sufficient power to perform a method according to aspects and embodiments of the herein disclosed subject matter efficiently with low cost.

According to an embodiment, the Rayleigh length of the radiation beam is larger than 1.5 millimeters. Additionally and/or alternatively, according to an embodiment the method comprises adjusting the focus position of the radiation beam in the direction of the radiation beam during generating the digital code pattern. Both measures, providing a large Rayleigh length and adjusting the focus position of the radiation beam in the direction of the radiation beam allows for providing a curved surface with a digital code pattern of high quality.

According to an embodiment, the 1/e² beam width of the radiation beam is larger than 100 µm, in particular larger than 200 µm, e.g. 500 µm. A larger beam width facilitates providing of a suitable laser beam for performing the method according to aspects and embodiments of the herein disclosed subject matter.

According to a further embodiment, the radiation beam is a laser beam of a carbon dioxide laser. A carbon dioxide laser has the advantage of providing a high a laser power which reduces the time necessary to generate the digital code pattern in the rubber article.

According to a further embodiment, the recess pattern comprises a plurality of recess portions (including the first recess portion and the second recess portion) which do not overlap each other wherein the plurality of recess portions together define an elevated grid, the elevated grid comprising the protrusion and a further protrusion crossing the protrusion. An elevated grid may provide for a digital code pattern that provides a relatively high wear resistance.

According to a further embodiment, the recess pattern comprises a plurality of recess portions which are part of a single recess forming a recess grid. A recess grid may provide an improved dirt accumulation behavior, in particular if the protrusions defined by the recess grid have a certain movability and therefore the ability to release dirt particles catch in a recess portion.

Hence, in more general terms, the recess pattern may provide a grid, and may in particular provide a recess grid and/or an elevated grid.

According to a further embodiment, the recess grid comprises two recess lines which cross each other at a crossing point of the recess grid; and the depth of the recess grid at the crossing point differs by less than 30% from the depth of the recess grid in an adjacent portion of one of the two crossing recess lines. This reduced recession at the crossing point of the recess lines can be obtained by reducing the removal of a rubber material at the crossing point during generating at least one of the recess lines. For example, if the two recess lines are generated with a laser beam, according to an embodiment a first recess line of the two recess lines may be generated with a constant laser power level over the crossing point and a second recess line of the two recess lines may be generated while reducing or shutting down the laser power level at the crossing point or shortly before the crossing point. The optimum distance ahead of the crossing point at which the laser power level should be reduced in order to obtain a shallow depth profile at the crossing point may depend on the beam profile and the actual laser power.

According to a further embodiment, the digital code pattern comprises an array (e.g. a rectangular array) of code modules; and the recess grid forms an angle to one of the edges of the modules, the angle being between 20 and 70 degrees.

According to an embodiment, the digital code pattern comprises three adjacent code modules in a line, a first code module, a third code module and a second code module between the first code module and the third code module, and the method further comprises generating at the location of the first code module a first type of recess portion and generating at the location of the second code module a second type of recess portion which differs from the first type of recess portion in shape and/or orientation. Such an embodiment may provide for an improved wear resistance of the digital code pattern.

According to a further embodiment, the digital code pattern comprises in a line a first code module, a second code module and a third code module adjacent the first code module, and the method further comprises generating at the position of the first code module and at the position of the third code module a first type of recess portion and generating at the position the second code module a second type of recess portion which differs from the first type of recess portion in shape and/or orientation. For example, in an embodiment, the second type of recess portion may have a larger recess area. In case of a binary digital code, the first code module, the second code module and the third code module are all black modules since they all include a recess portion. In such an embodiment, the larger recess area of the second type recess portion may improve the readability of adjacent black modules.

According to an embodiment, the method comprises: providing the rubber article, the rubber article comprising a thickened portion and an adjacent neighboring portion, the thickened portion having a thickness that is larger than the thickness of the neighboring portion; and generating the recess pattern only in the thickened portion. The thickened portion of the rubber article allows for deeper recesses and hence a higher aspect ratio of the recesses. Herein, the aspect ratio is defined as the ratio of the depth of the recess over the width of the recess. A higher aspect ratio may improve the readability of the digital code pattern. In this regard it is noted that readability of a digital code pattern refers to machine readability of the digital code pattern. According to an embodiment, the aspect ratio of the first recess portion and/or the second recess portion is between 0.2 and 2.

According to an embodiment, each of the first recess portion and the second recess portion define an opening in the unaltered surface surrounding the recess. The opening may have one of an U-shape, an O-shape or an L-shape. According to an embodiment, the first recess portion is part of a recess having a spiral shape.

According to an embodiment, wherein the first recess portion and the second recess portion are part of a same recess forming a baseline extending at least partly around the protrusion.

According to a further embodiment, the recess pattern defines a blade flanked by the first recess portion and the second recess portion. For example, the recess pattern may define at least two of said blades arranged parallel to each other.

According to an embodiment, the method further comprises reproducing the recess portions over the area of the recess pattern in an irregular density and/or in an irregular orientation.

According to an embodiment, the protrusion is a first protrusion; the recess pattern comprises a third recess portion; and the first recess portion and the third recess portion define a second protrusion therebetween, the second protrusion being recessed with regard to the unaltered surface of the rubber article. For example, according to an embodiment, the first recess portion and the third recess portion may overlap down to a certain depth level such that the second protrusion does not extend to the level of the unaltered surface of the rubber article but is itself recess with respect to the unaltered surface of the rubber article. Such partially overlapping recess portions (overlapping down to a certain depth level) may be generated with a laser having an Gaussian intensity profile, e.g. by generating the first the recess portion and generating, at a certain distance from the first recess portion the third recess portion wherein the certain distance is selected such that the second protrusion remains.

According to a further embodiment, the recess pattern defines a specific type of modules of the digital code pattern, e.g., for a binary code pattern the black (dark) modules of the digital code pattern.

According to an embodiment, at least one lateral dimension of the first recess portion is larger than the size of a single black module. It is noted that a lateral dimension is a dimension in a direction parallel to the surface of the rubber article. Further according to an embodiment, at least one lateral dimension of the protrusion is larger than the size of a single black module.

As used herein, reference to a computer program product is intended to be equivalent to a reference to a program element and/or a computer readable medium containing instructions for controlling a processor device to effect and/or coordinate the performance of the described method.

The computer program may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

Any suitable aspect or embodiment of the herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

In the above there have been described and in the following there will be described exemplary embodiments of the subject matter disclosed herein with reference to a method of marking a rubber article, a marking device, a rubber article, and a computer program product. It has to be pointed out that of course any combination of features relating to different aspects of the herein disclosed subject matter is also possible. In particular, some features have been or will be described with reference to device type embodiments (relating to a marking apparatus or a rubber article) whereas other features have been or will be described with reference to method type embodiments (relating to a method or a computer program product). However, a person skilled in the art will gather from the above and the following description that, unless other notified, in addition to any combination of features belonging to one aspect also any combination of features relating to different aspects or embodiments, for example even combinations of features of device type embodiments and features of the method type embodiments are considered to be disclosed with this application. In this regard, it should be understood that any method feature derivable from a corresponding explicitly disclosed device feature should be based on the respective function of the device feature and should not be considered as being limited to device specific elements disclosed in conjunction with the device feature. Further, it should be understood that any device feature derivable from a corresponding explicitly disclosed method feature can be realized based on the respective function described in the method with any suitable device disclosed herein or known in the art.

The aspects and embodiments defined above and further aspects and embodiments of the herein disclosed subject matter are apparent from the examples to be described hereinafter and are explained with reference to the drawings, but to which the invention is not limited. The aforementioned definitions and comments are in particular also valid for the following detailed description and vice versa.

### BRIEF DESCRIPTION OF THE DRAWINGS

Fig. 1 shows a marking device for marking a rubber article according to embodiments of the herein disclosed subject matter.
Fig. 2 shows the rubber article of Fig. 1 in greater detail and after performing a method according to embodiments of the herein disclosed subject matter.
Fig. 3 shows part of a rubber article comprising part of a recess pattern according to embodiments of the herein disclosed subject matter.
Fig. 4 shows part of a rubber article comprising part of a recess pattern according to embodiments of the herein disclosed subject matter.
Fig. 5 shows part of a rubber article comprising part of a recess pattern according to embodiments of the herein disclosed subject matter.
Fig. 6 shows part of a rubber article comprising part of a recess pattern according to embodiments of the herein disclosed subject matter.

### DETAILED DESCRIPTION

The illustration in the drawings is schematic. It is noted that in different figures, similar or identical elements are provided with the same reference signs or with reference signs which are different from the corresponding reference signs only within the first digit. Accordingly, the description of the similar or identical features is not repeated in the description of subsequent figures in order to avoid unnecessary repetitions. However, it should be understood that the description of these features in the preceding figures is also valid for the subsequent figures unless explicitly noted otherwise.

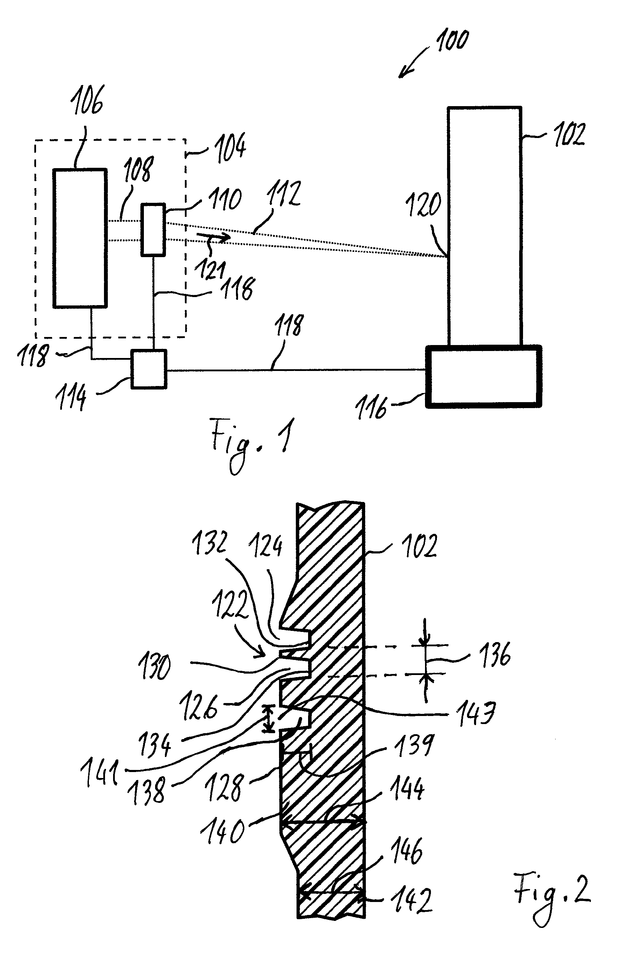

Fig. 1 shows a marking device 100 for marking a rubber article 102 according to embodiments of the herein disclosed subject matter.

The marking device 100 comprises a tool 104 in the form of a laser. The tool 104 is adapted (e.g. provides sufficient power) for removing rubber material of the rubber article 102. In accordance with an embodiment, the rubber article is vehicle tire. The tool 104 comprises a laser source 106 for generating a primary a laser beam 108 and an optical system 110 which receives the primary laser beam 108 and outputs in response hereto a secondary laser beam 112. Further, the marking device 100 comprises a control device 114 for controlling the tool 104 and in particular for controlling the laser source 106 and the optical system 110 to thereby perform a method according to aspects and embodiments of the herein disclosed subject matter. In accordance with an embodiment, the control device 114 is a processor device comprising one or more microprocessors for executing instructions of a computer program product according to embodiments of the herein disclosed subject matter.

In accordance with an embodiment, the marking device 100 further comprises a holder 116 for holding the rubber article 102 at a defined position with respect to the tool 104. According to an embodiment, the holder 116 is also controlled by the control device 104 and may comprise, according to an embodiment, a conveyor for moving the rubber article 102.

Control by the control device 104 is according to an embodiment performed via control signals indicated at 118 in Fig. 1. To this end, the control device 104 is according to an embodiment communicatively coupled to the respective device, i.e. to the laser source 106, the optical system 110 and the holder 116 in the described example.

According to an embodiment, the secondary laser beam 112 has a Rayleigh length which is larger than 1.5 millimeters (mm). According to an embodiment, the Rayleigh length is larger than 3 mm or even larger than 5 mm. According to an embodiment, the optical system 110 is adapted for adjusting the focus position 120 of the secondary laser beam 112 in the direction 121 of the (secondary) laser beam during generating the digital code pattern. In such a case, it is possible to implement embodiments of the herein disclosed subject matter with a small Rayleigh length on a curved rubber article 102.

According to an embodiment, the laser source 106 is a carbon dioxide laser which has a 1/e² beam width larger than 200 micrometers (µm), e.g. a 1/e² beam width of about 400 µm.

Fig. 2 shows the rubber article 102 of Fig. 1 in greater detail and after performing a method according to embodiments of the herein disclosed subject matter.

In accordance with an embodiment, the rubber article 102 comprises a recess pattern 122 in the rubber article. The recess pattern 122 defines a digital code pattern, e.g. a binary digital code pattern such as a QR code. In particular, according to embodiments of the herein disclosed subject matter, the digital code patter is a version 3 QR code.

According to an embodiment, the recess pattern 122 comprises a first recess portion 124 and the second recess portion 126 which are recessed with respect to an unaltered surface 128 of the rubber article 102. The first recess portion 124 and the second recess portion 126 define therebetween a protrusion 113 which protrudes over a bottom 132 of the first recess portion and the bottom 134 of the second recess portion. In accordance with an embodiment, a pitch 136 between the first recess portion 124 and the second recess portion 126 is larger than 0.5 mm, e.g. larger than 0.6 or even larger than 0.7 mm.

It should be understood, that the recess pattern 122 comprises a plurality of recess portions a further one of which is shown in Fig. 2 at 138.

In accordance with an embodiment, the rubber article comprises a thickened portion 140 and an adjacent neighboring portion 142, wherein the thickened portion has a thickness 144 which is larger than a thickness 146 of the neighboring portion. The thicknesses 144, 146 are determined in a direction perpendicular to the unaltered surface 128 of the rubber article 102.

The thickened portion 140 allows for high aspect ratio of the recess portions, which is defined as the ratio of the depth of the recess over the width of the recess. In particular, according to an embodiment, the aspect ratio of a recess portion 138 is defined as the depth 139 of the recess portion to the smallest width 141 of the opening 143 of the recess portion 138. In this regard it is noted that the opening 143 of the recess 138 is defined by the edge the unaltered surface 128 forms with the recess 138.

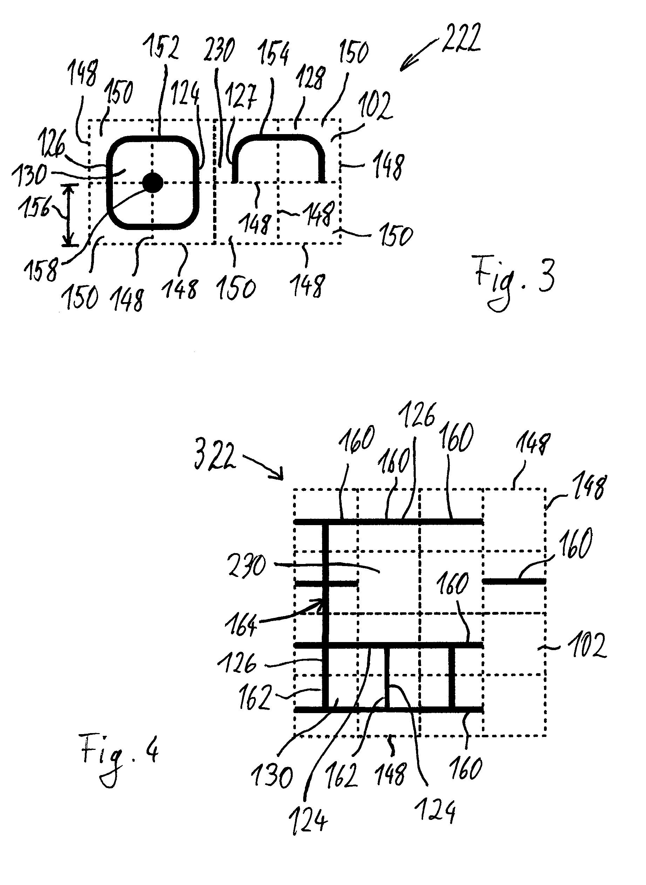

It is noted that Fig. 3 to Fig. 6 only illustrate principle features of the recess patterns shown. In particular, the dimensions of the recess portions compared to the dimensions of the code modules or other recess portions of the recess patterns may differ from the particular embodiment shown. It should be understood that the actual recess pattern, which defines a particular digital code pattern, depends on the content which is represented by the digital code pattern. However, a number of adjacent code modules which include a recess portion 124, 126 (such code modules are also referred to herein as black code modules) define a specific shape of the recess 152, 154 which is characteristic for respective embodiments.

With regard to Fig. 3 to Fig. 5 it is noted that the recesses and recess portions indicated by solid black lines are schematic and serve primarily the purpose of describing the shape of the recesses and recess portions. The width of the solid black lines does not necessarily correspond to the width of the respective recess portions. In particular, according to an embodiment the width of the recess portions is between 10% and 90% (or, in another embodiment, between 30% and 60%) of the lateral size 156 of a code module.

Fig. 3 shows part of a rubber article 102 comprising part of a recess pattern 222 according to embodiments of the herein disclosed subject matter.

A plurality of recess portions can be identified in the recess pattern 222 shown in Fig. 3. However, only exemplary recess portions are discussed in the following in order to illustrate embodiments of the herein disclosed subject matter. Further, there may be at least one set of interconnected recess portions, wherein each set of interconnected recess portions has a certain shape, such as an O-shape, as illustrated by a first recess 152 or an U-shape, as illustrated by a second recess 154 in Fig. 3. It is noted that the term "interconnected recess portions" refers to a single recess comprising the recess portions that are interconnected.

In accordance with an embodiment, the recess pattern 222 comprises a first recess portion 124 and a second recess portion 126 defining therebetween (i.e. between the first recess portion 124 and the second recess portion 126) a protrusion 130. Further, Fig. 3 shows edges of the code modules 150 of the digital code pattern. These edges are shown with dashed lines 148. It is noted, that the edges 148 are not physically transferred to the rubber article. Rather, the edges 148 are logical edges that are taken into account by a reader device (not shown in Fig. 3) based on the entire digital code pattern that is defined by the recess pattern. For example, in a QR code version 3 there are several features defined that allow the reader device to determine the version and the physical dimensions of the QR code, thereby defining the (logical) edges 148. In the context of this application the edges 148 are shown to facilitate understanding of the digital code pattern defined by the recess pattern 222. However, according to an embodiment only the recess portions 124, 126 (and the recesses 152, 154) are generated in the rubber article (and not the edges 148).

In accordance with an embodiment, the first recess portion 124 and the second recess portion 126 are part of a recess (the recess 152 in Fig. 3) surrounding a protrusion 130. The recess pattern 222 further comprises a third recess portion 127 which together with the first recess portion 124 defines a protrusion 230 therebetween. In accordance with an embodiment, the protrusion 230 has the form of a blade and may have its longest dimension in a direction parallel to at least one of the recess portions 124, 127 (depending on the digital code pattern that is to be implemented).

In accordance with an embodiment, the protrusion 130 has a base area of more than 0.2 mm². In this regard it is noted that the base area is defined in the typical way, namely the area defined by the recess 152 in the deepest plane spanned by the bottom of the recess 152. Further it is noted that the term "deep" refers to a direction perpendicular to the unaltered surface 128 of the rubber article and from the surface 128 into the rubber article.

In accordance with an embodiment, the digital code pattern, part of which is shown in Fig. 3, is a version 3 QR code comprising 29 x 29 code modules 150. Hence for a version 3 QR code of the size 15 x 15 square millimeters (mm²) a single module 150 has a lateral size 156 of 517 micrometers (µm) and hence an area of 517 x 517 µm². According to other embodiments the size of the QR code may be e.g. 16 x 16 mm² or 13 x 13 mm². Such sizes of QR codes are suitable for being provided on a rubber article in the form of a tire. Other sizes are possible depending on the size available on the rubber article.

In accordance with an embodiment, the protrusion 130 has a base area which is larger than the area of a single code module of the digital code pattern, as shown in Fig. 3. According to an embodiment, the protrusion 130 may comprise a further recess portion 158. The further recess portion 158 may be located in the center of the protrusion 130, as shown in Fig. 3. In this way, the readability of the digital code pattern may be improved.

The building instructions for generating a recess pattern according to an exemplary embodiment of the herein disclosed subject matter comprises generating a recess portion in the form of an arc for each black code module which preferably extends from one edge 148 of the code module 152 to an adjacent edge 148 of the same code module 150. Further, starting from one predefined starting code module 124 of the digital code pattern (e.g. the code module in the upper left corner of the digital code pattern) in the subsequent adjacent black code modules 126 the recess portions are oriented in a way that for up to four black neighboring code modules the recess portions as far as possible form a common recess 152, as shown in Fig. 3. According to another embodiment, the starting code module may be chosen such that it is part of a 2 x 2 group of adjacent black modules.

Fig. 4 shows part of a rubber article 102 comprising part of a recess pattern 322 according to embodiments of the herein disclosed subject matter.

In accordance with an embodiment, each black code module comprises a horizontal recess portion in the form of a horizontal line, e.g. as shown at 160 in Fig. 4. Between vertically adjacent black modules a connecting recess portion in the form of a vertical line is generated, e.g. as shown at 162 in Fig. 4. The connecting recess portions connect (i.e. form a common recess with) the horizontal recess portions of the vertically adjacent black modules, e.g. as shown in Fig. 4.

According to an embodiment, the horizontal recess portions 160 extend between the edges 148 of the code modules (i.e. they have a longitudinal size equal to the lateral size 156 of a code module 148) such that the horizontal recess portions 160 of adjacent black modules form a common recess. In accordance with an embodiment, four neighboring black modules (i.e. a 2 x 2 sub pattern of the digital code pattern) form a protrusion 130 between their horizontal recess portions 160 and the vertical recess portions 162, as shown in Fig. 4. Two black code modules separated by a white code module form a blade-like protrusion 230 between the two respective horizontal recess portions 160. It should be understood that opposing recess portions 160, 162 are first and second recess portions 124, 126 in the sense of the herein disclosed subject matter. In Fig. 4 some of the recess portions 160, 162 are exemplarily marked with a respective reference numbers 124, 126.

In accordance with an embodiment, at least some of the recess portions 160, 162 of the recess pattern 322 are part of a single (common) recess and form a recess grid 164.

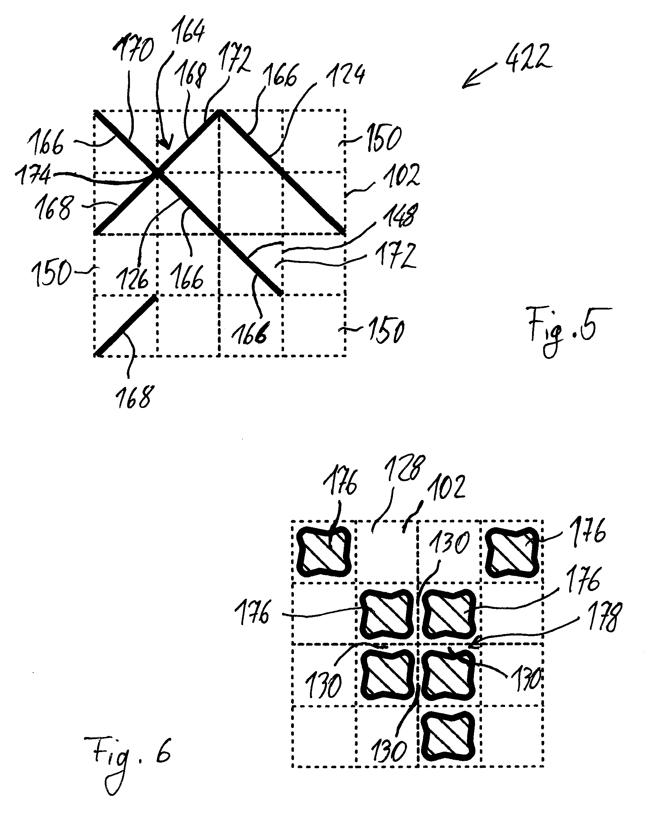

Fig. 5 shows part of a rubber article 102 comprising part of a recess pattern 422 according to embodiments of the herein disclosed subject matter.

According to an embodiment, the code modules 150 of the recess pattern 422 form an array, e.g. a rectangular array, as shown in Fig. 5. Further, in accordance with an embodiment, the recess pattern 422 comprises at least one recess portion 166 of a first type. According to an embodiment, the recess pattern 422 comprises at least one recess portion 168 of a second type, different from the first type recess portion 166. According to an embodiment, the first type recess portion 166 has the shape of a straight line, e.g. a diagonal line from the upper left corner to the lower right corner of the respective code module 150. According to a further embodiment, the second type recess portion 168 has the shape of a straight line, e.g. a diagonal line from the lower left corner to the upper right corner of the respective code module 150. Hence, the first type recess portion 166 and the second type recess portion 168 differ from each other in orientation of the recess portion.

In accordance with an embodiment, the first type recess portion 166 and the second type recess portion 168 are used in an alternating manner for adjacent to black modules. For example, if three black code modules are in a line, with a second code module arranged between a first code module and a third code module, the first type recess portion 166 is generated at the position of the first code module and of the third code module and the second type recess portion 168 is generated at the position of the second code module.

In accordance with an embodiment, the recess portion 166 in the form of a straight line forms an angle 172 to one of the edges 148 of its code module, wherein the angle is between 20 degrees and 70 degrees, e.g. between 40 degrees and 50 degrees, such as 45 degrees.

In accordance with an embodiment, adjacent recess portions form a single, common recess in the shape of a recess line 170, 172 (which may extend over two or more code modules). According to an embodiment, the recess pattern 422 comprises two recess lines 170, 172 which cross each other at a crossing point 174, thereby forming a recess grid 164. According to an embodiment, the recess grid 164 forms an angle (e.g. the angle 172, as shown in Fig. 5) to one of the edges 148 of the code modules 150. In accordance with an embodiment, the depth of the recess grid at the crossing point differs by less than 40% (or, according to other embodiments, less than 30 %, less than 20 % or even less than 10 %) from the depth of the recess grid besides the crossing point (e.g. between two crossing points).

As already mentioned with regard to Fig. 4, opposing recess portions 168, 170 are first and second recess portions 124, 126 in the sense of the herein disclosed subject matter.

Fig. 6 shows part of a rubber article 102 comprising part of a recess pattern 522 according to embodiments of the herein disclosed subject matter.

According to an embodiment, each black code module of the recess pattern 522 comprises a single recess portion 176 which may have the shape of a hole, e.g. an irregular hole, as shown in Fig. 6. The hachure within the black solid line in Fig. 6 indicates that the entire hachured area is recessed with respect to the unaltered surface 128 of the rubber article 102. The recess portions 176 do not overlap each other and together define an elevated grid 178 extending between the recesses (recess portions) 176. Opposing recesses 176 define a protrusion 130 therebetween. Hence, a 2 x 2 sub pattern of the digital code pattern defined by the recess pattern 522 define a first protrusion 130 and a further, second protrusion 130 crossing the first protrusion 130, as shown in Fig. 6.

Although some embodiments refer to a black or a white code module, etc., it should be understood that each of these references is considered to implicitly disclose a respective reference to only different types of modules. In particular in the sense of the herein disclosed subject matter a black code module is a code module which comprises part of the recess pattern (e.g. a recess portion). Also relative terms (vertical, horizontal, etc.) which relate to specific positions or orientations are considered to not limit the disclosed subject matter to the exemplary examples described and shown in the drawings but rather serve to facilitate understanding of some embodiments. Further, although some embodiments refer to a recess portion, it should be understood that according to an embodiment a recess portion may be part of a common recess which further comprises a second recess portion or even more recess portions. According to another embodiment, a recess portion may be a recess - in other words, according to an embodiment a recess may comprise only a single recess portion.

According to embodiments of the invention, any suitable entity (e.g. components, units and devices) disclosed herein are at least in part provided in the form of respective computer programs which enable a processor device to provide the functionality of the respective entities as disclosed herein. According to other embodiments, any suitable entity disclosed herein may be provided in hardware. According to other - hybrid - embodiments, some entities may be provided in software while other entities are provided in hardware.

It should be noted that any entity disclosed herein (e.g. components, units and devices) are not limited to a dedicated entity as described in some embodiments. Rather, the herein disclosed subject matter may be implemented in various ways and with various granularity on device level or software module level while still providing the specified functionality. Further, it should be noted that according to embodiments a separate entity (e.g. a software module, a hardware module or a hybrid module (combined software/hardware module)) may be provided for each of the functions disclosed herein. According to other embodiments, an entity (e.g. a software module, a hardware module or a hybrid module) is configured for providing two or more functions as disclosed herein. According to still other embodiments, two or more entities are configured for providing together a function as disclosed herein.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

Further, it should be noted that while the exemplary rubber articles in the drawings include a particular combination of several embodiments of the herein disclosed subject matter, any other combination of embodiment is also possible and is considered to be disclosed with this application.

In order to recapitulate some of the above described embodiments of the present invention one can state:
Provided is a method of marking a rubber article, the method comprising: generating a recess pattern in the rubber article by removal of rubber material, the recess pattern defining a digital code pattern comprising a plurality of code modules; the recess pattern comprising a first recess portion and a second recess portion, the first and second recess portions being recessed with respect to an unaltered surface of the rubber article; the first recess portion and the second recess portion defining therebetween a protrusion protruding over a bottom of each recess portion; wherein a pitch between the first recess portion and the second recess portion is larger than 0.5 mm or wherein the first recess portion and the second recess portion are part of a recess surrounding the protrusion and the protrusion has a base area of more than 0.2 square millimeters. According to an embodiment, two or more code modules share a common protrusion. In other words, these two or more code modules partially define a protrusion which extends over more than one code module.

## Claims

1. Method of marking a rubber article, the method comprising:
generating a recess pattern in the rubber article by removal of rubber material, the recess pattern defining a digital code pattern;
the recess pattern comprising a first recess portion and a second recess portion, the first and second recess portions being recessed with respect to an unaltered surface of the rubber article;
the first recess portion and the second recess portion defining therebetween a protrusion protruding over a bottom of each recess portion;
wherein a pitch between the first recess portion and the second recess portion is larger than 0.5 mm; or
wherein the first recess portion and the second recess portion are part of a recess surrounding the protrusion and the protrusion has a base area of more than 0.2 square millimeters.

2. Method according to claim 1, wherein said removal of rubber material is performed with an electromagnetic radiation beam, in particular with a laser beam.

3. Method according to claim 2, wherein
the Rayleigh length of the radiation beam is larger than 1.5 millimeters; and/or
the method comprising adjusting the focus position of the radiation beam in the direction of the radiation beam during generating the digital code pattern.

4. Method according to claims 2 or 3, wherein
the 1/e² beam width of the radiation beam is larger than 100 µm, in particular larger than 200 µm; and/or
the radiation beam is a laser beam of a carbon dioxide laser laser.

5. Method according to any of the preceding claims,
the recess pattern comprising a plurality of recess portions which do not overlap each other;
wherein the plurality of recess portions together define an elevated grid, the elevated grid comprising the protrusion and a further protrusion crossing the protrusion.

6. Method according to any of the claims 1 to 4,
the recess pattern comprising a plurality of recess portions which are part of a single recess forming a recess grid.

7. Method according to claim 6, wherein
the recess grid comprises two recess lines which cross each other at a crossing point of the recess grid; and
depth of the recess grid at the crossing point differs by less than 30% from the depth of the recess grid in an adjacent portion of one of the two crossing recess lines.

8. Method according to claims 6, wherein
the digital code pattern comprises an array of code modules; and
the recess grid forms an angle to one of the edges of the modules, the angle being between 20 and 70 degrees.

9. Method according to any one of the preceding claims, wherein the digital code pattern comprises a first code module and a second code module adjacent the first code module, the method further comprising
generating at the location of the first code module a first type of recess portion and generating at the location of the second code module a second type of recess portion which differs from the first type of recess portion in shape and/or orientation.

10. Method according to any one of claims 1 to 8, wherein the digital code pattern comprises three adjacent code modules in a line, a first code module, a third code module and a second code module between the first code module and the third code module, the method further comprising
generating at the position of the first code module and at the position of the third code module a first type of recess portion and generating at the position of the second code module a second type of recess portion which differs from the first type of recess portion in shape and/or orientation.

11. Method according to any one of the preceding claims, the method comprising:
providing the rubber article, the rubber article comprising a thickened portion and an adjacent neighboring portion, the thickened portion having a thickness that is larger than the thickness of the neighboring portion; and
generating the recess pattern only in the thickened portion.

12. Method according to any one of the preceding claims, the method comprising:
generating at least one of the first recess portion and the second recess portion with an aspect ratio between 0.2 and 2, wherein the aspect ratio is defined as the depth of the recess portion over the width of the recess portion.

13. Marking device for marking a rubber article, in particular a tire, the marking device comprising:
a tool, in particular a laser, for removing rubber material of the rubber article;
a control device for controlling the tool to thereby perform the method according to any one of the preceding claims.

14. Rubber article comprising:
a recess pattern in the rubber article, the recess pattern defining a digital code pattern;
the recess pattern comprising a first recess portion and a second recess portion, the first and second recess portions being recessed with respect to an unaltered surface of the rubber article;
the first recess portion and the second recess portion defining therebetween a protrusion protruding over a bottom of each recess portion;
wherein a pitch between the first recess portion and the second recess portion is larger than 0.5 mm or
if the protrusion is surrounded by connected recess portions the protrusion having an area of more than 0.2 square millimeters.

15. Computer program product configured for controlling a marking device, the computer program product being configured for, when executed on a data processor device, controlling the method according to any one of claims 1 to 12.
